# EUROPÄISCHE PATENTANMELDUNG

(11) **EP 0 742 502 A2**
(43) Veröffentlichungstag der Anmeldung: **13.11.1996**
(21) Anmeldenummer: 96107435.8
(22) Anmeldetag: 10.05.1996
(51) Int. Cl.: G05B 19/4063

(54) **Einrichtung zum Überprüfen eines Istwerstes auf das Einhalten eines Toleranzfensters**

(30) Priorität: 11.05.1995 DE 19517377
(71) Anmelder: SIEMENS AKTIENGESELLSCHAFT, 80333 München (DE)
(72) Erfinder: Schmittele, Max, Dipl.-Ing., 91058 Erlangen (DE); Schleicher, Siegfried, Dr.-Ing., 90113 Chemnitz (DE); Brune, Richard, Dipl.-Ing., 90765 Fürth (DE); Hertinger, Klaus, Ing.(FH), 91056 Erlangen (DE); Hauf, Ronald, Dipl.-Ing., 91096 Möhrendorf (DE)

(57) **Zusammenfassung**

Mit einem einzigen Komparator (K) wird ein Istwert (xᵢ) zunächst auf einen unteren Grenzwert (UG) und dann auf einen oberen Grenzwert (OG) geprüft. Innerhalb des Toleranzfensters liegende Istwerde (xᵢ) lösen ein Binärsignal _{"}01" am Komparatorausgang aus und werden in einem Speicher (SP) abgelegt, der zuvor in den Zustand _{"}10" gebracht worden ist. Nur bei ordnungsgerechter Abfolge dieser Zustände liegt auch ein ordnungsgerechter Zustand vor. Die Einrichtung detektiert dabei auch _{"}schlafende Fehler" der Komponenten.

## Beschreibung

Die Erfindung bezieht sich auf eine Einrichtung zum Überprüfen eines Istwertes auf das Einhalten eines Toleranzfensters zwischen einem oberen und einem unteren Grenzwert.

Derartige Einrichtungen sind beispielsweise aus der DE-OS 43 20 325 bekannt, die jeweiligen Grenzen werden dabei jeweils durch einen gesonderten Vergleich geprüft. Dabei besteht nun jedoch die Gefahr, daß ein sozusagen _{"}schlafender Fehler" auftritt, wenn einer der Komparatoren seinen Dienst versagt.

Aufgabe der Erfindung ist es, eine Einrichtung der eingangs genannten Art so auszubilden, daß mit Sicherheit auch Komparatorfehler detektiert werden.

Gemäß der Erfindung wird diese Aufgabe dadurch gelöst, daß ein den Istwert repräsentierendes Signal dem ersten Eingang eines Komparators zuleitbar ist, daß dem zweiten Eingang des Komparators zeitlich aufeinanderfolgend ein dem oberen Grenzwert und ein dem unteren Grenzwert entsprechendes Signal zuschaltbar ist, dergestalt, daß ein Unterschreiten des oberen Grenzwertes ein Signal logisch _{"}0" und ein Überschreiten des unteren Grenzwertes ein Signal logisch _{"}1" am Ausgang des Komparators auslöst, wobei beide logischen Zustande in einem Speicher registrierbar sind, der vor den beiden Vergleichsvorgängen in einem komplementären logischen Zustand setzbar ist, und daß im Anschluß an die Vergleichsvorgange über ein Steuerwerk nur bei einer Speicherzustandsfolge - komplementäres eingeprägtes logisches Signal _{"}10", logisches Vergleichssignal _{"}01" - ein tolerierbarer Istwert detektierbar ist.

Insbesondere dann, wenn die Einrichtung ihren Einsatz in sicheren Steuerungssystemen, insbesondere für Werkzeugmaschinen und Roboter, findet, erweist es sich als vorteilhaft, daß bei einem nicht tolerierbaren Istwert programmierbare Fehlerreaktionen, insbesondere Stopreaktionen bei bewegten Systemen, auslösbar sind. Das Zusammenspiel von Rücksetzen der Speicher, Komparatorbetrieb und programmierbarem Stop-Modul kann dabei in Gesamtsystemen durchaus in jeweils taktweise stattfindende Vorgänge, z.B. Lesen, Vergleichen, Berechnen und Schreiben, eingebunden werden.

Selbstverständlich kann das der Erfindung zugrundeliegende Prinzip auch so angewendet werden, daß entweder ein Vertauschen der logischen Signale _{"}0" und _{"}1" vorgenommen ist, oder daß ein Vertauschen der Abfolge des Vergleichs des Istwertes mit dem oberen Grenzwert und mit dem unteren Grenzwert erfolgt.

Ein Ausführungsbeispiel der Erfindung ist in der Zeichnung dargestellt und wird im folgenden näher erläutert. Dabei zeigen:
FIG 1 ein Blockschaltbild,
FIG 2 Signalverläufe und
FIG 3 ein Zeitdiagramm.

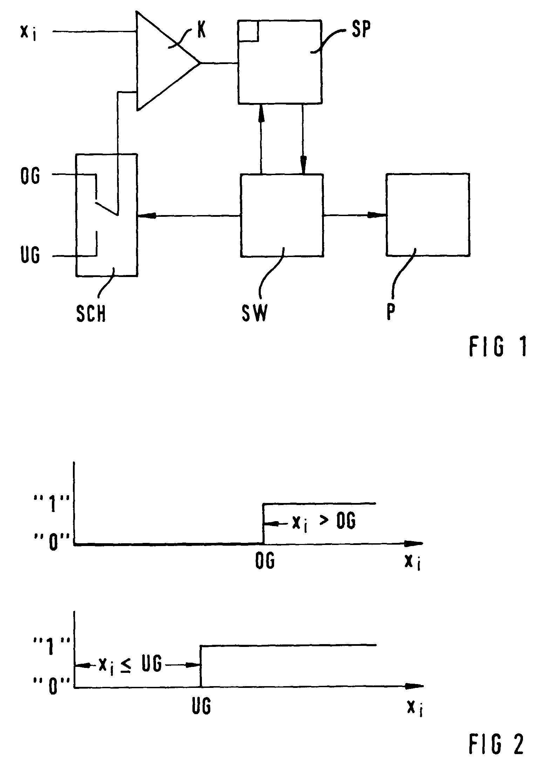

In der Darstellung gemäß FIG 1 ist die für die Erfindung wesentliche Struktur gezeigt, daß nämlich ein einen zu überprüfenden Istwert xᵢ repräsentierende Signal dem ersten Eingang eines Komparators K zugeleitet wird und dort mit einem dem Komparator K über einen zweiten Eingang zugeleitetes Signal verglichen wird, das einen oberen Grenzwert OG repräsentiert, wenn sich eine Schaltstufe SCH in der dargestellten Schaltposition oder einen unteren Grenzwert UG in der anderen Schaltposition befindet. Gesteuert wird die Schaltstufe SCH durch ein Schaltwerk SW, z.B. einen Prozessor. Das zweite Signal, das im Komparator K sozusagen einen Referenzwert darstellt, wird in Form eines elektrischen Signals über die Schaltstufe SCH jeweils an den zweiten Eingang des Komparators K geleitet.

In der Darstellung gemäß FIG 2 ist das Schaltverhalten des Komparators K bezüglich des Istwertes xᵢ und des oberen Grenzwertes OG bzw. des unteren Grenzwertes UG gezeigt. Im oberen Teil von FIG 2 ist ersichtlich, daß dann, wenn der Istwert xᵢ größer als obere Grenzwert OG wird, der Ausgang des Komparators K nicht mehr ein Signal logisch _{"}0" sondern ein Signal logisch _{"}1" führt. Hier deutet das Signal logisch _{"}1" also das Überschreiten eines Toleranzfensters nach oben hin an.

Im unteren Teil von FIG 2 ist gezeigt, daß dann, wenn der Istwert xᵢ kleiner oder gleich dem unteren Grenzwert UG ist, ein Signal logisch _{"}0" am Ausgang des Komparators ansteht, andernfalls jedoch am Ausgang des Komparators ein Signal logisch _{"}1" ansteht. Hier wird das Signal logisch _{"}0" dazu herangezogen, das Unterschreiten des unteren Grenzwertes UG für das Toleranzfenster anzuzeigen. Wenn man das Überschreiten des Toleranzfensters und das Unterschreiten des Toleranzfensters jeweils als einen Fehlerfall ansehen muß, wird dieser Fehlerfall in der in der Darstellung gemäß FIG 1 angenommenen Schaltstellung bezüglich des oberen Grenzwertes durch ein Signal logisch _{"}1" angedeutet und in der sich daran anschließenden Überprüfung des unteren Grenzwertes führt ein diesbezüglich komplementärer Zustand, nämlich ein Signal logisch _{"}0" zu einer derartigen Aussage. Die beiden aufeinanderfolgenden Prüfergebnisse auf dem oberen und dem unteren Grenzwert OG bzw. UG werden in einem Speicher SP abgelegt. Demzufolge muß bei einem ordnungsgemäßen Betrieb durch den Vergleich ein logisches Signal _{"}01" vorliegen. Jede andere Binärkombination würde auf einen den Toleranzbereich verletzenden Zustand hindeuten.

Um jedoch auch den ordnungsgemäßen Betrieb des Speichers SP zu überprüfen, wird vor dem eigentlichen Vergleichsvorgang für das Toleranzfenster bezüglich des oberen Grenzwertes OG und daraufhinfolgend bezüglich des unteren Grenzwertes UG zuvor der Speicher SP in einen zum ordnungsgemäßen Prüfzustand komplementären Zustand logisch _{"}10" gesetzt. Die diesbezüglichen Zugriffsmöglichkeiten des Schaltwerkes SW auf den Speicher SP sind dabei durch zwei richtungsverschiedene Pfeile angedeutet. Im Schaltwerk SW wird nun geprüft, ob das Rücksetzen in den Zustand logisch _{"}10" und das daraufhin folgende angestrebte Vergleichsergebnis logisch _{"}01" tatsächlich ordnungsgemäß aufeinanderfolgend stattgefunden hat. Sofern dies der Fall ist, liegt ein ordnungsgemäßer Betrieb vor, andernfalls liegt ein Fehler vor, der eine Stopreaktion, die anwenderseitig von ihrem Ablauf her programmierbar sein kann, nach sich ziehen muß. Diesbezügliche Signale können vom Schaltwerk SW an den zu steuernden Prozeß P ausgegeben werden. Selbstverständlich kann auch eine Fehlermeldung erfolgen.

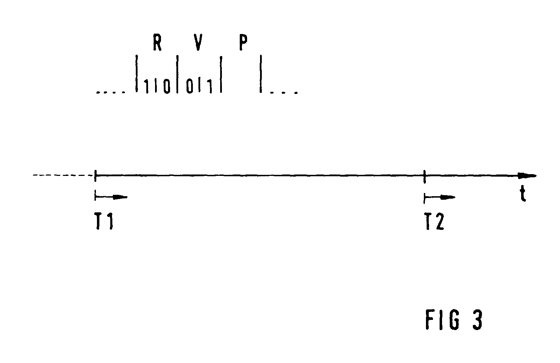

In der Darstellung gemäß FIG 3 ist nun angedeutet, daß die gesamte Routine in den taktgesteuerten Betrieb einer Ein-oder Mehrprozessoranordnung eingebunden sein kann. Diese Mehrprozessoranordnung möge beispielsweise auch die Funktion des Schaltwerkes SW nach FIG 1 beinhalten. Eingebunden in zyklische Vorgänge, wie Lesen, Vergleichen, Berechnen und Schreiben, auf die der Übersichtlichkeit halber nicht weiter eingegangen wird, kann innerhalb der Zeit t in einem Takt T1 und bedarfsweise in den folgenden Takten T2 bis Tn jeweils das Rücksetzen _{"}R" des Speichers SP auf ein komplementäres Signal logisch _{"}10" gegenüber dem im ordnungsgemäßen Vergleichszustand entsprechenden Signal erfolgen. Daraufhin kann der Vergleichsvorgang _{"}V" ausgelöst werden, der bezüglich des oberen Grenzwertes OG ein Signal logisch _{"}0" und bezüglich des unteren Grenzwertes UG ein Signal logisch _{"}1" bei ordnungsgemäßem Betrieb anzeigt, woraus ein Binärwort logisch _{"}01" entsteht, das komplementär zum zuvor eingeprägten Rücksetzwert ist. Anschließend an die Vorgänge Rücksetzen _{"}R" und Vergleichen _{"}V" kann dann in einem softwaremäßigen Stop-Modul eine Ergebnisprüfung dieser beiden Zustände in einem Prüfvorgang _{"}P" erfolgen. Wie bereits weiter oben geschildert, deutet nur die ordnungsgemäße Abfolge der logischen Signale, wie sie in der Darstellung gezeigt ist, auf das Einhalten des zulässigen Toleranzfensters hin.

Die Erfindung kann prinzipiell auch für andere Maschinen mit Sicherheitsbedürfnis verwendet werden.

## Patentansprüche

1. Einrichtung zum Überprüfen eines Istwertes (xᵢ) auf das Einhalten eines Toleranzfensters zwischen einem oberen (OG) und einem unteren Grenzwert (UG), **dadurch gekennzeichnet,** daß ein den Istwert (xᵢ) repräsentierendes Signal dem ersten Eingang eines Komperators (K) zuleitbar ist, daß dem zweiten Eingang des Komperators (K) zeitlich aufeinanderfolgend ein den oberen Grenzwert (OG) und ein dem unteren Grenzwert (UG) entsprechendes Signal zuschaltbar ist, dergestalt, daß ein Unterschreiten des oberen Grenzwertes (OG) ein Signal logisch _{"}0" und ein Überschreiten des unteren Grenzwertes (UG) ein Signal logisch _{"}1" am Ausgang des Komperators (K) auslöst, wobei beide logischen Zustände in einem Speicher (SP) registrierbar sind, der vor den beiden Vergleichsvorgängen in einen komplementären logischen Zustand setzbar ist und daß im Anschluß an die Vergleichsvorgänge über ein Steuerwerk (SW) nur bei einer Speicherzustandsfolge - komplementäres eingeprägtes logisches Signal _{"}10", logisches Vergleichssignal _{"}01" - ein tolerierbarer Istwert detektierbar ist.

2. Einrichtung nach Anspruch 1, **dadurch gekennzeichnet,** daß bei einem nicht tolerierbaren Istwert (xᵢ) programmierbare Fehlerreaktionen, insbesondere Stopreaktionen bei bewegten Systemen, auslösbar sind.

3. Einrichtung nach einem der vorstehenden Ansprüche, **dadurch gekennzeichnet**, daß ein Vertauschen der logischen Signale _{"}0" und _{"}1" vorgenommen ist.

4. Einrichtung nach einem der vorstehenden Ansprüche, **dadurch gekennzeichnet**, daß ein Vertauschen der Abfolge des Vergleichs des Istwertes (xᵢ) mit dem oberen Grenzwert (OG) und des Vergleichs des Istwertes (xᵢ) mit dem unteren Grenzwert (UG) vorgenommen ist.
